# EUROPEAN PATENT APPLICATION

(11) **EP 2 096 810 A1**
(43) Date of publication of application: **02.09.2009**
(21) Application number: 07850676.3
(22) Date of filing: 11.12.2007
(51) Int. Cl.: H04L 12/66, H04M 3/00, H04Q 7/34

(54) **LINE EXCHANGE USER AGENT SYSTEM, COMMUNICATION DEVICE, AND SERVICE PROVIDING METHOD USED FOR THEM**

(30) Priority: 22.12.2006 JP 2006346031
(71) Applicant: NEC Corporation, Minato-ku Tokyo 108-8001 (JP)
(72) Inventor: TAKANO, Yusuke, Minato-ku Tokyo 108-8001 (JP); TAMURA, Toshiyuki, Minato-ku Tokyo 108-8001 (JP)
(74) Representative: Vossius & Partner
(86) International application number: PCT/JP2007/074187
(87) International publication number: WO 2008/078583

(57) **Abstract**

A circuit switching user agent system includes a service processing device arranged in a home network of an IMS (IP Multimedia Subsystem)/MMD (Multi-Media Domain). The circuit switching user agent system also includes a communication device arranged in a visited network where a mobile terminal has visited, the communication device having a function of interconversion between a UNI (User-Network Interface) signal in a circuit switching network to which the mobile terminal is connected and a signal used in the IMS/MMD.

## Description

### Technical Field

The present invention relates to a circuit switching user agent system, a communication device, a service processing device, and a service providing method used therefor. More particularly, the present invention relates to providing a service for a transition from a circuit switching network to a network using an IP (Internet Protocol),

### Background Art

A transition from a circuit switching network to a network using an IP is currently being made. A cellular phone system is also making its transition from a circuit switching system to a system using an IP.

In such a transition for a home network of an IMS (IP Multimedia Subsystem)/MMD (Multi-Media Domain), there has been employed a method of converting a circuit switching signal to a signal used in the IMS/MMD.

In a cellular phone system, one of significant differences between control in a circuit switching network and control in the IMS/MMD is as follows: In the circuit switching, a location registration, a supplementary service, and the like are performed by a device located in a circuit switching network where a mobile terminal has visited. On the other hand, in the JMS/MMD, those services are performed by an SIP (Session Initiation Protocol) server and an application server located in a home network (e.g., see Non-patent Document 1).
Non-patent Document 1: "Mobile Radio interface Layer 3 Supplementary Services Specification; General Aspects" [3GPP (3rd Generation Partnership Project) TS 24.010 V6.0.0 (2004-12)]

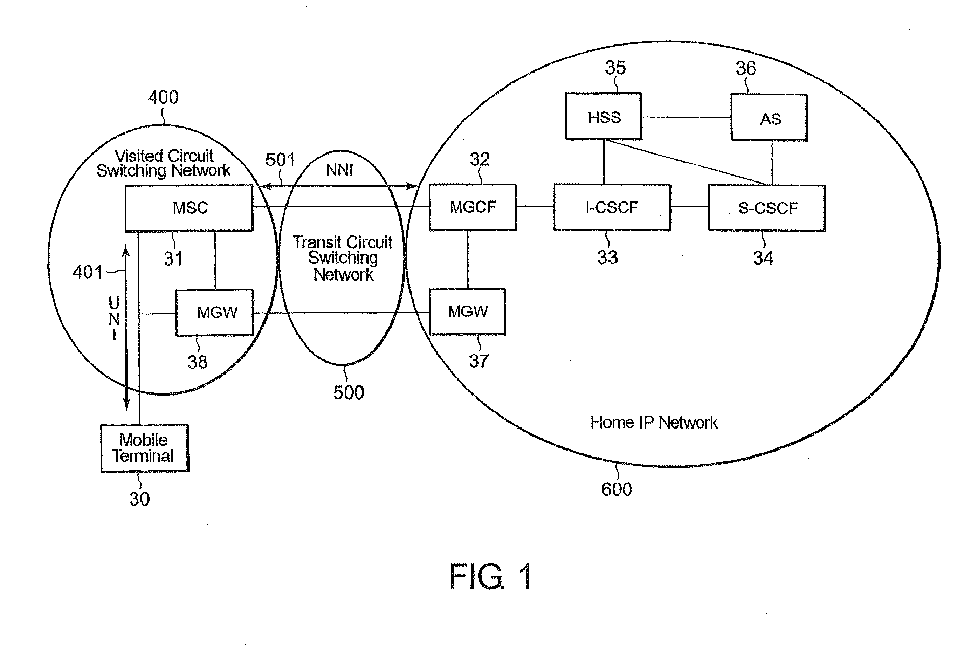

Related art to the present invention has proposed a configuration as shown in FIG. 1 in order for a home IP network to convert a signal from a circuit switching network. In FIG. 1, a circuit switching signal from a circuit switching network (visited circuit switching network) 400 is converted into an IMS/MMD signal by an interface device [an MGCF (Media Gateway Control Function) 32 and an MGW (Media GateWay) 37] at an entry to a home IP network 600. The home IP network 600 further includes an I-CSCF (Interrogating-Call Session Control Function) 33, an S-CSCF (Serving-Call Session Control Function) 34, an HSS (Home Subscriber Server) 35, and an AS (Application Server) 36.

In this configuration, a location registration information management and a supplementary service for a mobile terminal 30 are performed by an MSC (Mobile Switching Center) 31. Location information and supplementary service control information from the mobile terminal 30 are communicated via a UNI (User-Network interface) 401 between the mobile terminal 30 and the network device (MSC 31).

### Disclosure of Invention

However, the aforementioned cellular phone system includes a transit circuit switching network 500 interposed between the circuit switching network 400 and the home IP network 600. Signals on an NNI (Network-Network Interface) 501 in the transit circuit switching network 500 between the networks (between the MSC 31 and the MGCF 32) have no capability to transmit information communicated on the UNI 401. Accordingly, it is difficult to provide a service for the IMS/MMD that is equivalent to a service provided for the circuit switching system in the related art.

The present invention has been made to solve the above problems. It is, therefore, the present invention seeks to provide a circuit switching user agent system capable of providing a service for an IMS/MMD that is equivalent to a service provided for a circuit switching system.

Furthermore, the present invention seeks to provide a communication device and a service processing device suitable for the aforementioned circuit switching user agent system, and a service providing method used for these devices.

A circuit switching user agent system according to an aspect of the present invention includes a service processing device arranged in a home network of an IMS (IP Multimedia Subsystem)/MMD (Multi-Media Domain). The circuit switching user agent system include a communication device arranged in a visited network where a mobile terminal has visited. The communication device has a function of interconversion between a UNI (User-Network Interface) signal in a circuit switching network to which the mobile terminal is connected and a signal used in the IMS/MMD.

Specifically, in a circuit switching user agent system according to an aspect of the present invention, a communication device in a visited network to which a mobile terminal has been connected performs a registration to the IMS/MMD with use of location registration information/status of the mobile terminal in a circuit switching network. A UNI signal from the mobile terminal is incorporated into a signal used in the IMS/MMD and transferred to a service processing device in a home network. Thus, it is possible to provide a service for the IMS/MMD that is equivalent to a service for circuit switching of the related art.

Here, the visited network is a network configured to process both of a UNI signal in the circuit switching network and a signal used in the IMS/MMD. In other words, the communication device in the visited network to which the mobile terminal has been connected is a communication device operable to process both of a UNI signal in the circuit switching network and a signal used in the IMS/MMD.

In the circuit switching user agent system, when a circuit switching signal in a cellular phone system is to be converted to a signal used in the IMS/MMD, a registration process to the IMS/MMD is performed depending upon location registration status in the circuit switching network. Then the circuit switching signal is converted into a signal used in the IMS/MMD. A UNI signal from the mobile terminal is transferred to the network of the IMS/MMD as needed. A signal required for the mobile terminal to have for the IMS/MMD is generated on the behalf of the mobile terminal. Accordingly, it is possible to provide a service for the IMS/MMD that is equivalent to a circuit switching service in the related art.

More specifically, in the circuit switching user agent system, an extended communication device in which an MSC (Mobile Switching Center)/VLR (Visitor Location Register) and a CSUA (circuit switching user agent) are combined with each other transmits a signal used in the IMS/MMD to an S-CSCF (Serving-Call Server Control Function) based on location information status in the circuit switching of the network where the mobile terminal has visited, thereby performing a registration process for the IMS/MMD.

After the registration process for the IMS/MMD, the extended communication device converts a circuit switching signal to a signal used in the IMS/MMD for a general circuit switching call process (outgoing/incoming call). Furthermore, when the extended communication device receives a UNI signal including a supplementary service control from the mobile terminal, it transfers the supplementary service control signal to the S-CSCF with use of an SIP (Session Initiation Protocol) signal used in the IMS/MMD based on the type of the supplementary service control signal. That is, the extended communication device incorporates the supplementary service control signal to a signal used in the IMS/MMD and transfers it to the S-CSCF as it is.

The SIP signal in which the UNI signal has been incorporated is transferred to a supplementary service AS (Application server) by a filter process based on a user profile in the S-CSCF. In the supplementary service AS, a supplementary service is executed for the mobile terminal.

Thus, in the circuit switching user agent system, a supplementary service control signal of the circuit switching signal is transferred to the supplementary service AS, which is located as a service execution device in the home network, with the SIP signal used in the IMS/MMD. Therefore, it is possible to provide a service for the IMS/MMD that is equivalent to a service provided for the circuit switching. Furthermore, with regard to the transferred signal, the supplementary service AS can be configured to use resources of existing circuit switching devices.

Therefore, since the circuit switching user agent system performs a supplementary service process for the IMS/MMD with a signal for a supplementary service in circuit switching of the related art, it is possible to provide a service equivalent to a service provided for circuit switching.

Furthermore, since the circuit switching user agent system handles a signal for circuit switching of the related art in the supplementary service AS, a supplementary service processing component in the extended communication device can be utilized in common. Accordingly, resources can be used efficiency to achieve a transition to a system using an IP.

A communication device according to an aspect of the present invention is arranged in a visited network where a mobile terminal has visited in a circuit switching user agent system including a service processing device arranged in a home network of an IMS (IP Multimedia Subsystem)/MMD (Multi-Media Domain). The communication device has a function of interconversion between a UNI (User-Network Interface) signal in a circuit switching network to which the mobile terminal is connected and a signal used in the IMS/MMD.

A service processing device according to an aspect of the present invention is arranged in a home network of an IMS (IP Multimedia Subsystem)/MMD (Multi-Media Domain) and has a processing part operable to process a signal used in the IMS/MMD in which a circuit switching signal in a cellular phone system has been incorporated.

A service providing method according to an aspect of the present invention is used in a circuit switching user agent system including a service processing device arranged in a home network of an IMS (IP Multimedia Subsystem)/MMD (Multi-Media Domain). In the service providing method, a communication device arranged in a visited network where a mobile terminal has visited performs a process of registration to the IMS/MMD with use of location registration information/status of the mobile terminal in a circuit switching network to which the mobile terminal has been connected and a process of incorporating a UNI (User-Network Interface) signal from the mobile terminal into a signal used in the IMS/MMD and transferring it to the service processing device.

### Brief Description of Drawings

FIG. 1 is a block diagram showing a network configuration in related art.
FIG. 2 is a block diagram showing a configuration of a circuit switching user agent system according to a first embodiment of the present invention.
FIG. 3 is a block diagram showing a configuration of an extended communication device shown in FIG. 2.
FIG. 4 is a block diagram showing a configuration of a supplementary service AS shown in FIG. 2.
FIG. 5 is a sequence chart showing a registration procedure in the first embodiment of the present invention.
FIG. 6 is a sequence chart showing an outgoing/incoming call restriction service initiation procedure in the first embodiment of the present invention.
FIG. 7 is a sequence chart showing an outgoing call restriction operation in the first embodiment of the present invention.
FIG. 8 is a block diagram showing a configuration of a circuit switching user agent system according to a second embodiment of the present invention.
FIG. 9 is a block diagram showing a configuration of a circuit switching user agent system according to a third embodiment of the present invention.
FIG. 10 is a sequence chart showing an outgoing/incoming call restriction service initiation procedure in the third embodiment of the present invention.
FIG. 11 is a sequence chart showing an outgoing/incoming call restriction service initiation procedure in a fourth embodiment of the present invention.
FIG. 12 is a diagram showing an example of an approach using a VCC according to the present invention.
FIG. 13 is a diagram showing an example of interoperation of an eMSC-Server/MGCF according to the present invention.
FIG. 14 is a diagram showing an example of architecture of an eMSC-Server according to the present invention.
FIG. 15 is a diagram showing an example of a transition to architecture of an eMSC-Server according to the present invention.

### Best Mode for Carrying Out the Invention

Next, embodiments of the present invention will be described with reference to the drawings.

### [First Embodiment]

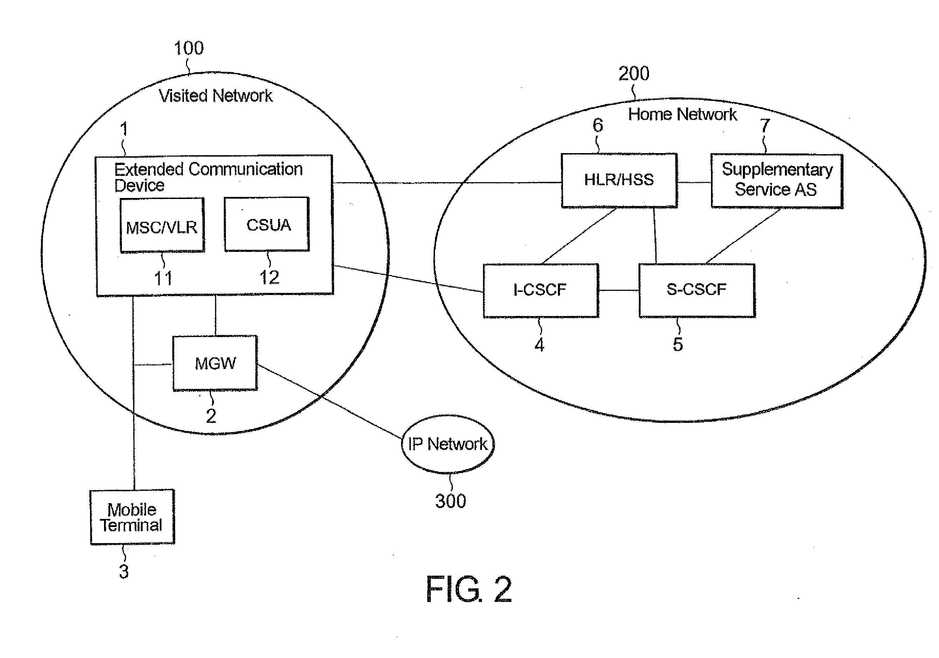

FIG. 2 is a block diagram showing a configuration of a circuit switching user agent system according to a first embodiment of the present invention. In FIG. 2, the circuit switching user agent system according to the first embodiment of the present invention includes a visited network 100 in which an extended communication device (communication device) 1 and an MGW (Media Gateway) 2 are arranged. The circuit switching user agent system also includes a home network 200 in which an I-CSCF (Interrogating-Call Session Control Function) 4, an S-CSCF (Serving-Call Session Control Function) 5, an HLR (Home Location Register)/HSS (Home Subscriber Server) 6, and a supplementary service AS (Application Server) (service processing device) 7 are arranged, and an IP (Internet Protocol) network 300.

Here, the visited network 100 is a network configured to process both of a UNI (User-Network Interface) signal in a circuit switching network and a signal used in an IMS (IP Multimedia Subsystem)/MMD (Multi-Media Domain). In other words, the extended communication device 1 located in the visited network 100 to which a mobile terminal (e.g., a cellular phone) 3 has been connected is a communication device operable to process both of a UNI signal in a circuit switching network and a signal used in the IMS/MMD.

The extended communication device 1 combines an MSC (Mobile Switching Center)/VLR (Visitor Location Register) part (registration part) 11 in the related art with a CSUA (circuit switching user agent) part (transfer part) 12. The extended communication device 1 performs a registration process in the IMS/MMD for the S-CSCF 5 based on a location registration of the mobile terminal 3 in the circuit switching.

The extended communication device 1 implements functions that are required for the mobile terminal 3 to have for the IMS/MMD (such as transmission and reception of signals) on behalf of the mobile terminal 3. In order to absorb operational differences between the circuit switching and the IMS/MMD, the extended communication device 1 converts a call control signal of the circuit switching from the mobile terminal 3 to a signal used in the IMS/MMD.

Furthermore, the extended communication device 1 incorporates (embeds) a circuit switching signal including a supplementary service control, among UNI signals from the mobile terminal 3, into an IMS/MMD signal and then transfers that signal to the S-CSCF 5. The S-CSCF 5 transfers the IMS/MMD signal in which the circuit switching signal including the supplementary service control has been incorporated to the supplementary service AS 7 by a filtering process based on a user profile.

Examples of a method of incorporating a circuit switching signals of a UNI signal inducing a supplementary service control into an IMS/MMD signal include a method of using a message body of an SIP message. A message body of an SIP message includes information defined by a protocol other than SIP and is optional in the structure of an SIP message. For example, MIME (Multipurpose Internet Mail Extensions), which is used to send an attached file or the like added to a message in electronic mail, is used as a method of adding a message body to an SIP message.

Furthermore, the extended communication device 1 defines a new flag, for example, in a user profile from the HLR/HSS 6 and determines, by the presence of the flag, whether to initiate a conversion process to the IMS/MMD for the mobile terminal 3.

The MGW 2 is a media conversion system configured to convert a media signal AMR (Adaptive Multi Rate) on an ATM (Asynchronous Transfer Mode)/STM (Synchronous Transfer Mode) in the circuit switching network into a media signal AMR on the IP,

In other words, the MGW 2 is a media gateway having both functions of the MGW 38 in the visited circuit switching network 400 and the MGW 37 in the home IP network 600 as described in FIG, 1. Thus, by having both functions of the MGW 38 and the MGW 37 in the related art, the MGW 2 can serve as a conversion part operable to convert user media data in the circuit switching directly to media data used in the IMS/MMD.

Thus, media data that have been obtained via the MGW 38 in the visited circuit switching network 400 and the MGW 37 in the home IP network 600 in the related art can be received directly from the MGW 2 so as to optimize its path.

The supplementary service AS 7 is a device configured to analyze a UNI signal from the mobile terminal 3 which has been transferred as a signal used in the IMS/MMD from the extended communication device 1 and to execute a supplementary service in accordance with the analysis result. Furthermore, the supplementary service AS 7 has functions of generating a UNI signal which is a response to the mobile terminal 3 and a UNI signal which is a notification to the mobile terminal 3, such as completion of a service, and of transmitting them via the S-CSCF 5 to the extended communication device 1 with use of a signal used in the IMS/MMD.

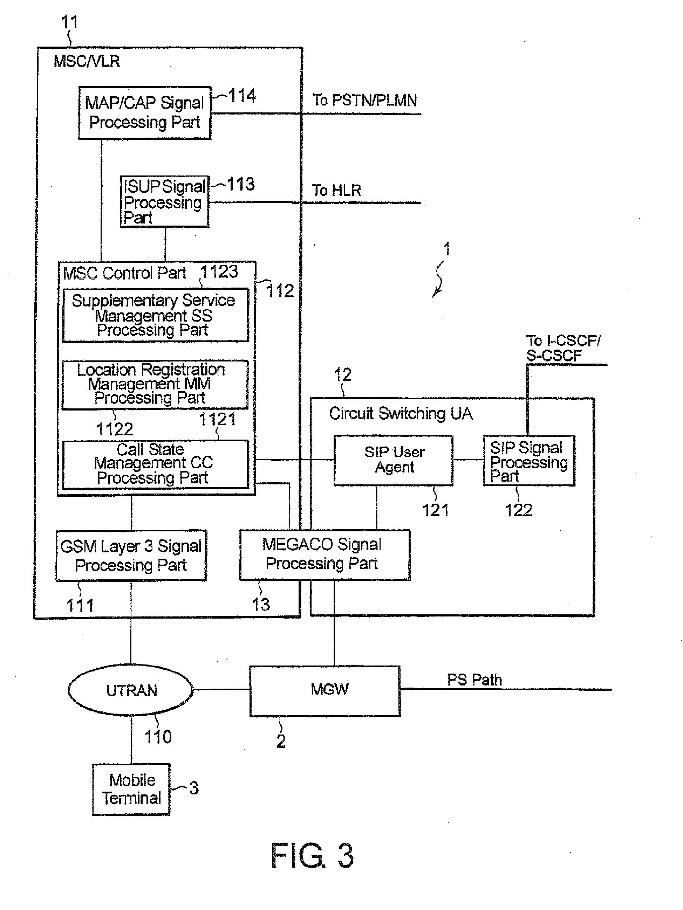

FIG. 3 is a block diagram showing a configuration of the extended communication device 1 shown in FIG. 2. In FIG. 3, the extended communication device 1 has a structure in which the MSC/VLR part 11 and the circuit switching UA (User Agent) part 12 are combined with each other. The MSC/VLR part 11 includes an MAP (Mobile Application Part)/CAP [CAMEL (Customized Application for Mobile network Enhanced Logic) Application Part] signal processing part 114, an ISUP [ISDN (integrated Services Digital Network) User Part] signal processing part 113, an MSC control part 112, and a GSM (Global System for Mobile communications) Layer 3 signal processing part 111. The circuit switching UA part 12 includes an SIP user agent part 121 and an SIP signal processing part 122.

FIG. 3 shows an example in which the MSC/VLR 11 is connected to the home network 200 (FIG. 2) via a PSTN (Public Switched Telephone Network)/PLMN (Public Land Mobile Network). In other words, FIG. 3 shows that a PSTN/PLMN is interposed between the visited network 100 and the home network 200. Furthermore, FIG. 3 shows that a UTRAN (Universal Terrestrial Radio Access Network) 110 is interposed between the mobile terminal 3 and the visited network 100 (the MSC/VLR 11 and the MGW 2).

The MSC control part 112 includes a call state management CC (Call Control) processing part 1121, a location registration management MM (Mobility Management) processing part 1122, and a supplementary service management SS (Supplementary Service) processing part 1123.

A MEGACO (Megaco/H.248) signal processing part 13 provides a function common to the MSC/VLR part 11 and the circuit switching UA part 12. With this configuration, the MSC control part 112 in the MSC/VLR part 11 and the SIP user agent part 121 in the circuit switching UA part 12 internally cooperate with each other to perform a registration/call control/supplementary service process (MM/CC/SS) in both of the circuit switching and the IMS/MMD.

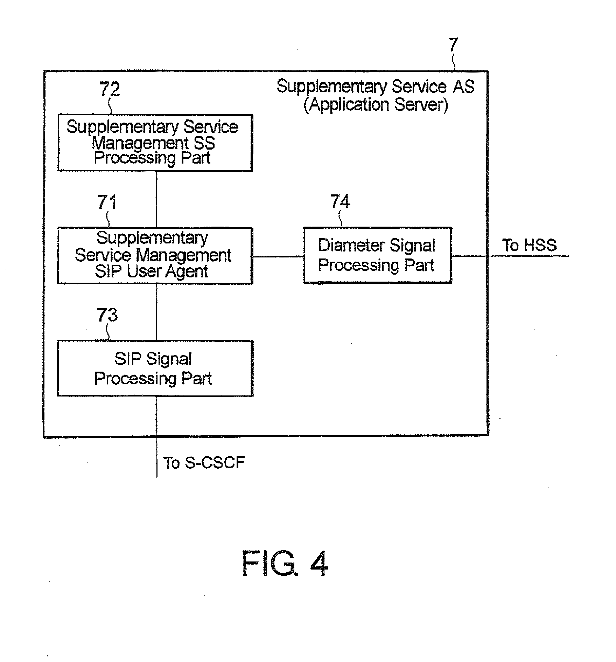

FIG. 4 is a block diagram showing a configuration of the supplementary service AS 7 shown in FIG. 2. In FIG. 4, the supplementary service AS 7 includes a supplementary service management SIP user agent 71 operable to manage an supplementary service for the IMS/MMD, a supplementary service management SS processing part (processing part) 72 operable to process and analyze signals subjected to transparent transport, a diameter signal processing part 74, and an SIP signal processing part 73.

With this configuration, the supplementary service AS 7 can utilize the supplementary service management SS processing part 1123 in the MSC control part 112 as the supplementary service management SS processing part 72.

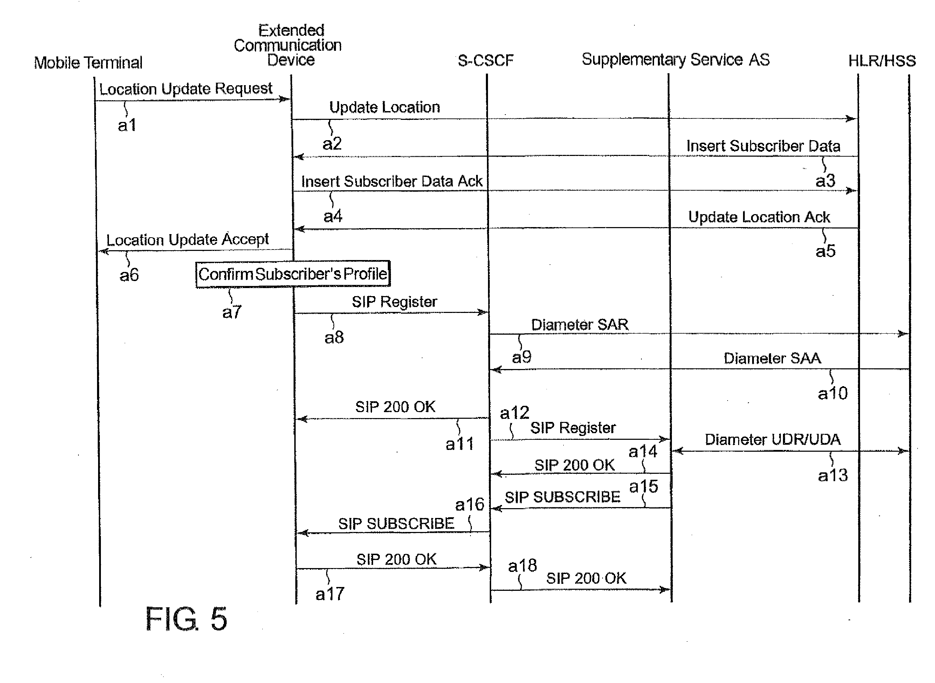

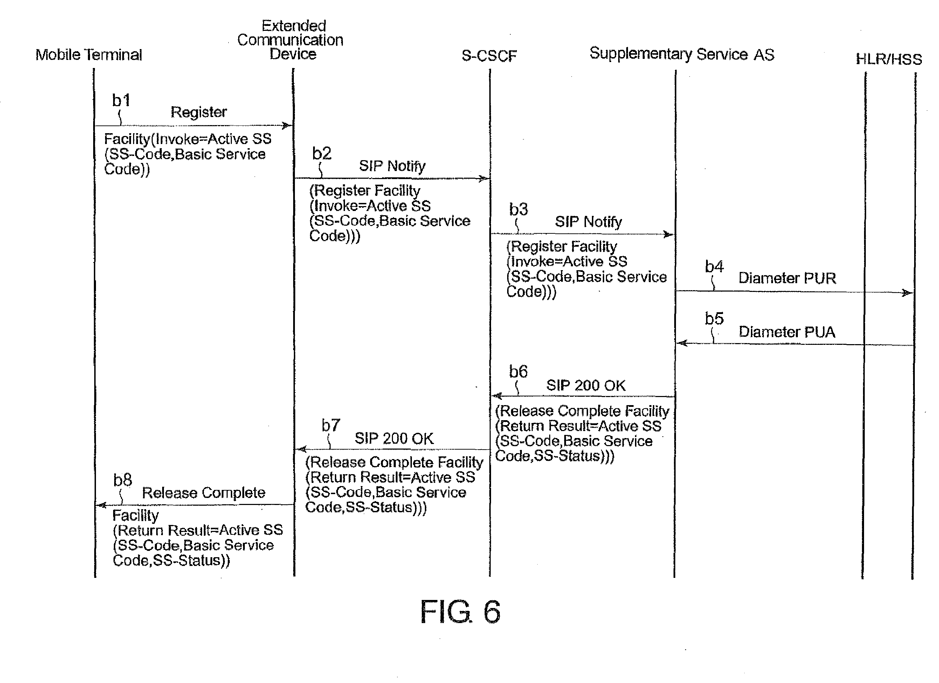

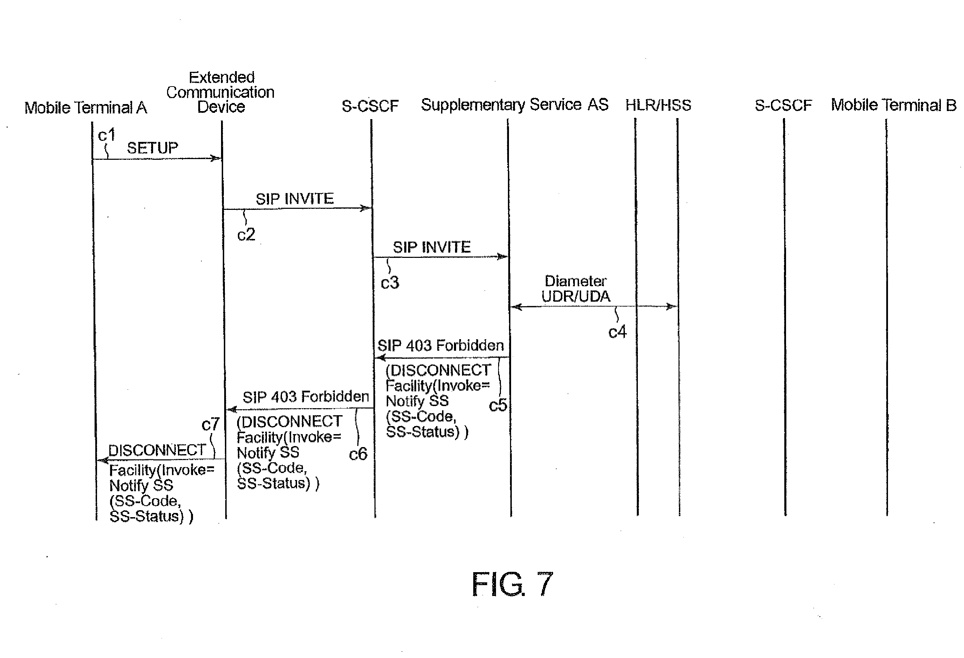

FIG. 5 is a sequence chart showing a registration procedure in the first embodiment of the present invention, FIG. 6 is a sequence chart showing an outgoing/incoming call restriction service initiation procedure in the first embodiment of the present invention, and FIG. 7 is a sequence chart showing an outgoing call restriction operation in the first embodiment of the present invention. Operations of the circuit switching user agent system in the first embodiment of the present invention will be described below with reference to FIGS. 2 to 7.

A registration procedure in the first embodiment of the present invention will be described with the example shown in FIG. 5. In the following description, the HLR/HSS 6 may be referred to distinctively as the HLR 6 or as the HSS 6 to specify its function.

Triggered by a Location Update Request signal (a1 in FIG. 5) from the mobile terminal 3, the extended communication device 1 obtains a user profile from the HLR/HSS 6 by transmissions of an Update Location signal (a2 in FIG. 5), an Insert Subscriber Data signal (a3 in FIG. 5), an Insert Subscriber Data Ack signal (a4 in FIG. 5), and an Update Location Ack signal (a5 in FIG. 5) at the MSC/VLR part 11, generates a VLR (Visitor Location Register), and transmits a Location Update Accept signal (a6 in FIG. 5) to the mobile terminal 3.

Thereafter, the extended communication device 1 confirms the user profile downloaded from the HLR 6 (a7 in FIG. 5) and determines whether to initiate a conversion process to the IMS/MMD. If the extended communication device 1 determines that the conversion process to the IMS/MMD is to be initiated, then it generates an SIP Register signal (a8 in FIG. 5) from the components of the location update request signal (a1 in FIG. 5) from the mobile terminal 3 and the components of the Insert Subscriber Data Ack signal (a4 in FIG. 5) from the HLR 6 and transmits it to the S-CSCF 5 to perform a registration process in the IMS/MMD for the mobile terminal 3.

The S-CSCF 5 obtains a user profile from the HSS 6 by transmissions of Diameter SAR (Server Assignment Request)/SAA (Server Assignment Answer) signals (a9 and a 10 in FIG. 5) and uses the obtained user profile to perform a registration process on the supplementary service AS 7 (a12-a14 in FIG. 5).

When the supplementary service AS 7 receives an SIP Register signal a12 in FIG. 5) from the S-CSCF 5, it obtains a user profile of the mobile terminal 3 from the HSS 6, as needed, by transmissions and receptions of Diameter UDR (User Data Request)/UDA (User Data Answer) signals (a13 in FIG. 5). The supplementary service AS 7 performs a registration process according to the profile of the mobile terminal 3 and then transmits an SIP SUBSCRIBE signal (a15 and a16 in FIG. 5) via the S-CSCF 5 to the extended communication device 1 in order to allow the extended communication device 1 to receive a notification of the supplementary service.

If the extended communication device 1 determines in the aforementioned process a7 that the conversion process to the IMS/MMD is not to be initiated or if the registration process to the IMS/MMD (a8-a14 in FIG. 5) fails, then the extended communication device 1 operates as an MSC in the related art and continues the same circuit switching service as that provided in the related art.

Next, an initiation procedure of an outgoing/incoming call restriction service in the first embodiment of the present invention, which is one of typical circuit switching services, will be described below with reference to FIG. 6.

By a user's operation of the terminal, the mobile terminal 3 transmits a Register signal indicating initiation of an outgoing/incoming call restriction service in the CS (Circuit Switch) (b1 in F1G. 6) to the extended communication device 1. When the extended communication device 1 receives the Register signal of the CS, then it analyzes the Register signal to determine whether the signal represents a supplementary service based on the type of the signal. If the mobile terminal 3 has completed a registration process in the IMS/MMD, then the extended communication device 1 incorporates (embeds) the Register signal of the CS into an SIP Notify signal (b2 in FIG. 6) for the supplementary service AS 7 and transmits it to the S-CSCF 5.

When the S-CSCF 5 receives the SIP Notify signal in which the Register signal of the CS has been incorporated (b2 in FIG. 6), then it transfers the SIP Notify signal in which the Register signal of the CS has been incorporated (b3 in FIG. 6) to the supplementary service AS 7.

When the supplementary service AS 7 receives the SIP Notify signal in which the Register signal in the CS has been incorporated (b3 in FIG. 6), then it analyzes the Register signal of the CS, initiates an outgoing/incoming call restriction service, and notifies the HSS 6 of the initiation of the service, i.e., the change of the service status, by a profile update procedure using a Diameter PUR (Profile Update Request) signal (b4 in FIG. 6).

When the supplementary service AS 7 is notified of the completion with a Diameter PUA (Profile Update Answer) signal (b5 in FIG. 6) after the process in the HSS 6 has been completed, then it transmits an SIP 200 OK signal in which a CS signal indicating the completion of initiation of the supplementary service has been incorporated (b6 and b7 in FIG. 6) via the S-CSCF 5 to the extended communication device 1.

When the extended communication device 1 receives the SIP 200 OK signal in which the CS signal indicating the completion of initiation of the supplementary service has been incorporated (b7 in FIG. 6), then it transmits the CS (Release Complete) signal included in the SIP signal (b8 in FIG. 6) to the mobile terminal 3. in the present embodiment, initiation of a supplementary service is thus performed with these steps.

Furthermore, an outgoing call restriction process in the first embodiment of the present invention will be described below with reference to FIG. 7.

When the extended communication device 1 receives a SETUP signal (c1 in FIG. 7), which is an outgoing call signal from a mobile terminal A to a mobile terminal B, then it converts the SETUP signal of the CS signal (c1 in FIG. 7) into an SIP INVITE signal of an IMS/MMD signal (c2 in FIG. 7) and transmits the converted signals to the S-CSCF 5.

When the S-CSCF 5 receives the SIP INVITE signal (c2 in FIG. 7), then it transfers the SIP INVITE signals (c3 in FIG. 7) to the supplementary service AS 7.

When the supplementary service AS 7 receives the SIP INVITE signal (c3 in FIG. 7), it obtains a user profile of the mobile terminal A, as needed, from the HSS 6 by transmissions of Diameter UDR/UDA signals (c4 in FIG. 7). The supplementary service AS 7 determines whether to perform outgoing call restriction according to the profile of the mobile terminal A and transmits an SIP 403 Forbidden signal in which a CS signal indicative of the outgoing call restriction has been incorporated (c5 in FIG. 7) to the S-CSCF 5.

Based on the profile of the mobile terminal A, the S-CSCF 5 determines whether the mobile terminal A has been connected to the circuit switching network 100 as a visited network. Then the S-CSCF 5 transfers the SIP 403 Forbidden signal in which the CS signal indicative of the outgoing call restriction has been incorporated (c6 in FIG. 7) to the extended communication device 1. When the extended communication device 1 receives the SIP signal including the CS signal therein (c6 in FIG. 7), then it transmits the CS signal (DISCONNECT) included in the SIP signal (c7 in FIG. 7) to the mobile terminal A. In the first embodiment, outgoing call restriction is thus performed with these steps.

Thus, in the first embodiment, a supplementary service process is performed in the IMS/MMD with use of a signal for a supplementary service in the circuit switching of the related art. Therefore, it is possible to provide a service equivalent to a service provided by the circuit switching.

Furthermore, in the first embodiment, the supplementary service AS 7 handles a signal used in the circuit switching of the related art. Therefore, a supplementary service processing component in the extended communication device 1 can be utilized in common. Accordingly, resources can be used efficiently to achieve a transition to a system using an IP.

### [Second Embodiment]

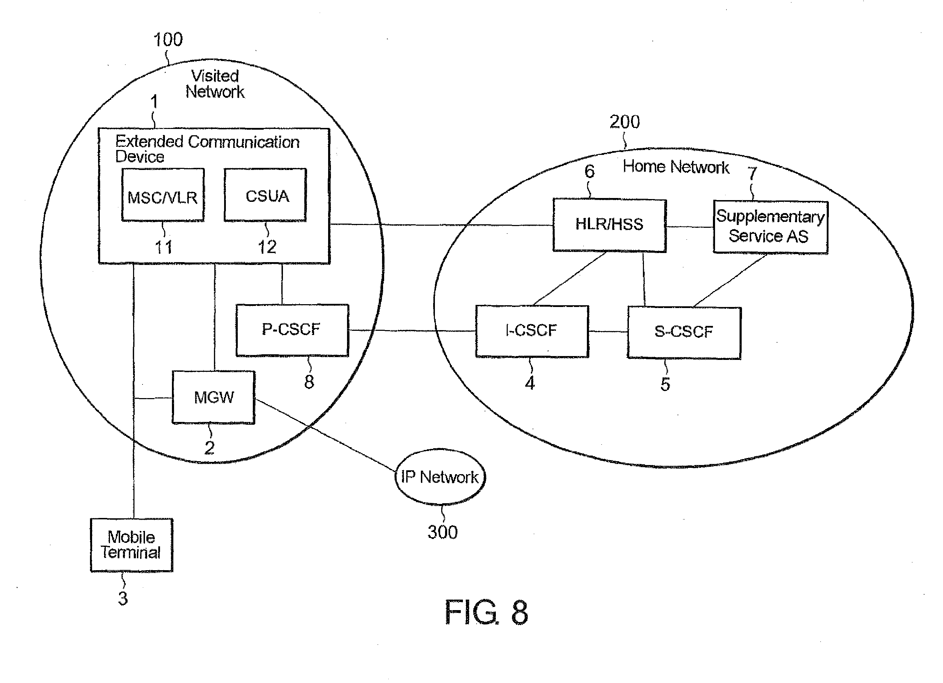

FIG. 8 is a block diagram showing an arrangement of a circuit switching user agent system according to a second embodiment of the present invention. In FIG. 8, the circuit switching user agent system according to the second embodiment of the present invention includes an extended communication device 1 which implements functions and operations required in the IMS/MMD on behalf of the mobile terminal 3. Therefore, the circuit switching user agent system has a network configuration in which a P-CSCF (Proxy-Call Session Control Function) (alternative part) 8 is arranged between the extended communication device 1 in a visited network 100 and an I-CSCF 4 in a home network 200. Except for this configuration, the circuit switching user agent system has the same arrangement as that in the circuit switching user agent system according to the aforementioned first embodiment. Accordingly, the same components as those in FIG. 2 are denoted by the same reference numerals.

Furthermore, the circuit switching user agent system according to the second embodiment operates in the same manner and has the same advantages as the circuit switching user agent system according to the first embodiment except for the configuration in which the P-CSCF 8 is arranged in the visited network 100. In other words, the second embodiment shows that the present invention is applicable to a system using the P-CSCF 8. It should be noted that the extended communication device 1 may have a function of the P-CSCF 8.

### [Third Embodiment]

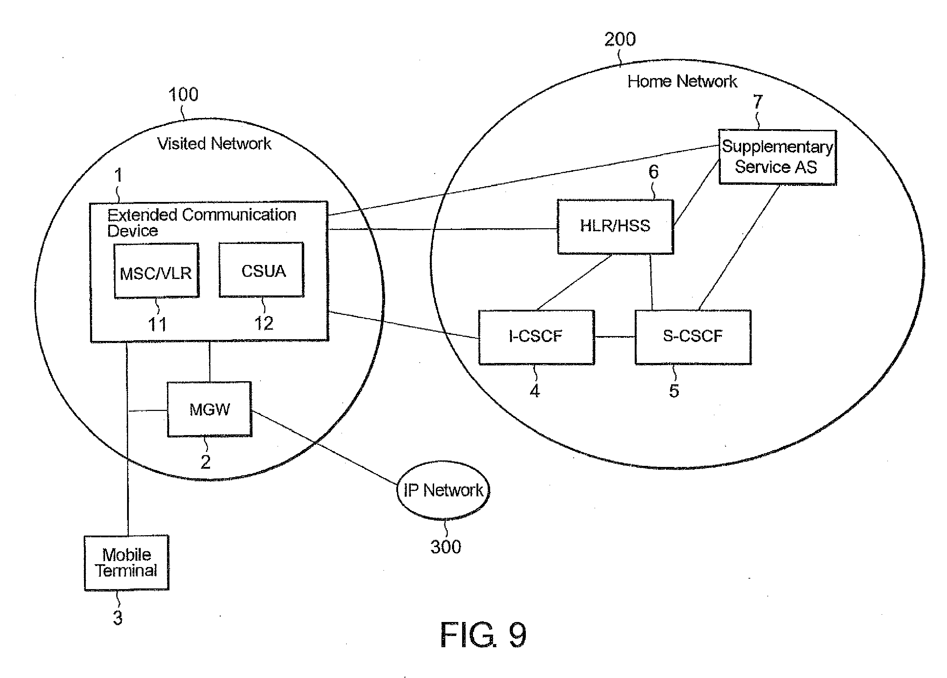

FIG. 9 is a block diagram showing an arrangement of a circuit switching user agent system according to a third embodiment of the present invention. In FIG. 9, the circuit switching user agent system according to the third embodiment of the present invention has the same arrangement as the circuit switching user agent system according to the first embodiment shown in FIG. 2 except for a configuration in which a supplementary service AS 7 in a home network 200 is connected directly to an extended communication device 1 in a visited network 100. Therefore, the same components as those in FIG. 2 are denoted by the same reference numerals. Furthermore, the circuit switching user agent system according to the third embodiment performs the same processes as described above except for the circuit switching user agent system and the outgoing/incoming call restriction service initiation procedure in the first embodiment.

In an outgoing/incoming call restriction service initiation procedure of the third embodiment, the extended communication device 1 communicates directly with the supplementary service AS 7. Therefore, a protocol to be used is HTTP (Hyper Text Transfer Protocol).

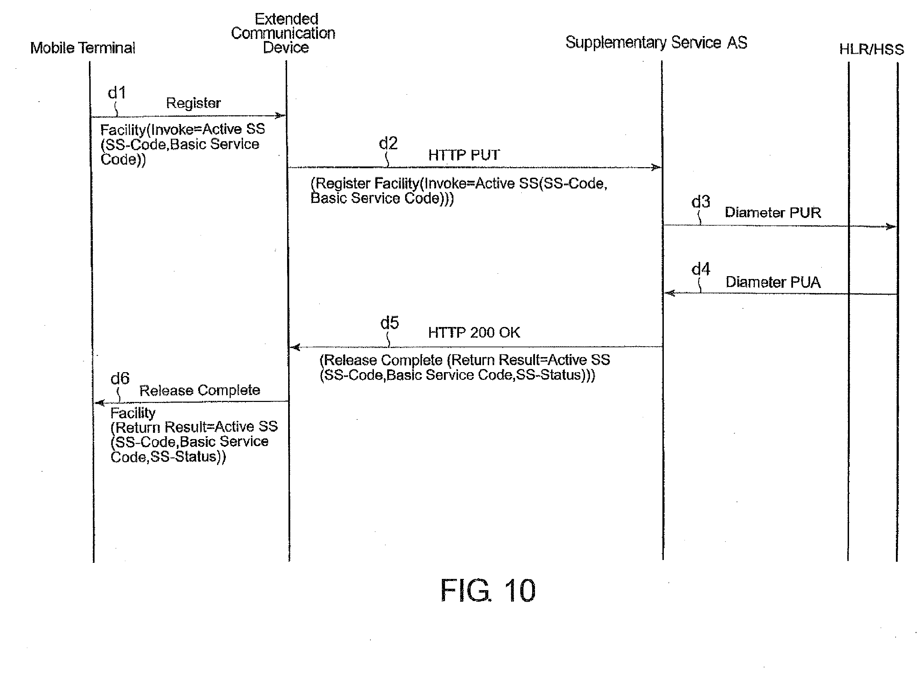

FIG. 10 is a sequence chart showing an outgoing/incoming call restriction service initiation procedure in the third embodiment of the present invention. An initiation procedure of an outgoing/incoming call restriction service in the third embodiment of the present invention, which is one of typical circuit switching services, will be described below with reference to FIG. 10.

By a user's operation of the terminal, the mobile terminal 3 transmits a Register signal indicating initiation of an outgoing/incoming call restriction service in the CS (d1 in FIG. 10) to the extended communication device 1. When the extended communication device 1 receives the Register signal in the CS, then it analyzes the Register signal to determine whether the signal represents a supplementary service based on the type of the signal. If the mobile terminal 3 has completed a registration process in the IMS/MMD, then the extended communication device 1 incorporates (embeds) the Register signal in the CS into an HTTP PUT signal (d2 in FIG. 10) and transmits it to the supplementary service AS 7.

When the supplementary service AS 7 receives the HTTP PUT signal in which the Register signal in the CS has been incorporated (d2 in FIG. 10), then it analyzes the Register signal in the CS, initiates an outgoing/incoming call restriction service, and notifies the HSS 6 of the initiation of the service, i.e., the change of the service status, by a profile update procedure using a Diameter PUR signal (d3 in FIG. 10).

When the supplementary service AS 7 is notified of the completion with a Diameter PUA signal (d4 in FIG. 10) after the process in the HSS 6 has been completed, then it transmits an HTTP 200 OK signal in which a CS signal indicating the completion of initiation of the supplementary service has been incorporated (d5 in FIG. 10) to the extended communication device 1.

When the extended communication device 1 receives the HTTP 200 OK signal in which the CS signal indicating the completion of initiation of the supplementary service has been incorporated (d5 in FIG. 10), then it transmits the CS signal (Release Complete) included in the HTTP 200 OK signal (d6 in FIG. 10) to the mobile terminal 3. In the third embodiment, initiation of a supplementary service is thus performed with these steps.

As described above, in the third embodiment, a CS signal can be incorporated by MIME as with the SIP in the first embodiment. Therefore, the third embodiment has the same advantages as the first embodiment.

### [Fourth Embodiment]

In a circuit switching user agent system in a fourth embodiment of the present invention, a supplementary service AS 7 in a home network 200 is connected directly to an extended communication device 1 in a visited network 100 as with the aforementioned third embodiment of the present invention. In an outgoing/incoming call restriction service initiation procedure of the fourth embodiment, the extended communication device 1 communicates directly with the supplementary service AS 7. Therefore, a protocol to be used is XCAP (An Extensible Markup Language (XML) Configuration Access Protocol).

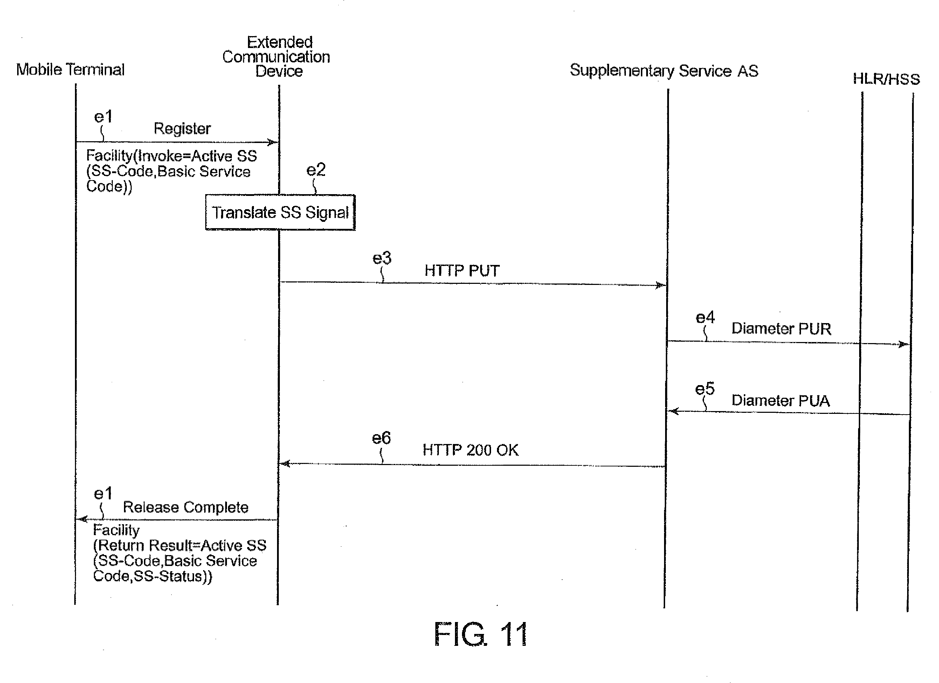

FIG. 11 is a sequence chart showing an outgoing/incoming call restriction service initiation procedure in the fourth embodiment of the present invention. An initiation procedure of an outgoing/incoming call restriction service in the fourth embodiment of the present invention, which is one of typical circuit switching services, will be described below with reference to FIG. 11.

By a user's operation of the terminal, the mobile terminal 3 transmits a Register signal indicating initiation of an outgoing/incoming call restriction service in the CS (e1 in FIG. 11) to the extended communication device 1. When the extended communication device 1 receives the Register signal in the CS, then it translates the SS signals (e2 in FIG. 11). If the mobile terminal 3 has completed a registration process in the IMS/MMD, then the extended communication device 1 incorporates (embeds) the Register signal in the CS into an HTTP PUT signal (e3 in FIG. 11) and transmits it to the supplementary service AS 7. Here, the SS signal refers to a signal for a supplementary service which is included in a CS signal.

When the supplementary service AS 7 receives the HTTP PUT signal in which the Register signal in the CS has been incorporated (e3 in FIG. 11), then it analyzes the Register signal in the CS, initiates an outgoing/incoming call restriction service, and notifies the HSS 6 of the initiation of the service, i.e., the change of the service status, by a profile update procedure using a Diameter PUR signal (e4 in FIG. 11).

When the supplementary service AS 7 is notified of the completion with a Diameter PUA (Profile Update Answer) signal (e5 in FIG. 11) after the process in the HSS 6 has been completed, then it transmits an HTTP 200 OK signal in which a CS signal indicating the completion of initiation of the supplementary service has been incorporated (e6 in FIG. 11 to the extended communication device 1,

When the extended communication device 1 receives the HTTP 200 OK signal in which the CS signal indicating the completion of initiation of the supplementary service has been incorporated (e6 in FIG. 11), then it transmits the CS signal (Release Complete) included in the HTTP signal (e7 in FIG. 11) to the mobile terminal 3. in the fourth embodiment, initiation of a supplementary service is thus performed with these steps.

As described above, in the fourth embodiment, a CS signal can be incorporated by MIME as with the SIP in the first embodiment. Therefore, the fourth embodiment has the same advantages as the first embodiment.

### [Fifth Embodiment]

The present invention has proposed to provide an MSC (Mobile service Switching Center)-Server (eMSC-Server) having an MGCF (Media Gateway Control Function) to define interaction of the MSC-Server. This eMSC-Server translates a call signal from a circuit switching network into a VoIP (Voice over Internet Protocol) call signal to a central processing network and transmits it, and vice versa. The eMSC-Server transmits the call signal to a TAS (Telephony Application Server) in the IMS. This sufficiently ensures the compatibility with existing Us and a transition to the all-IP network.

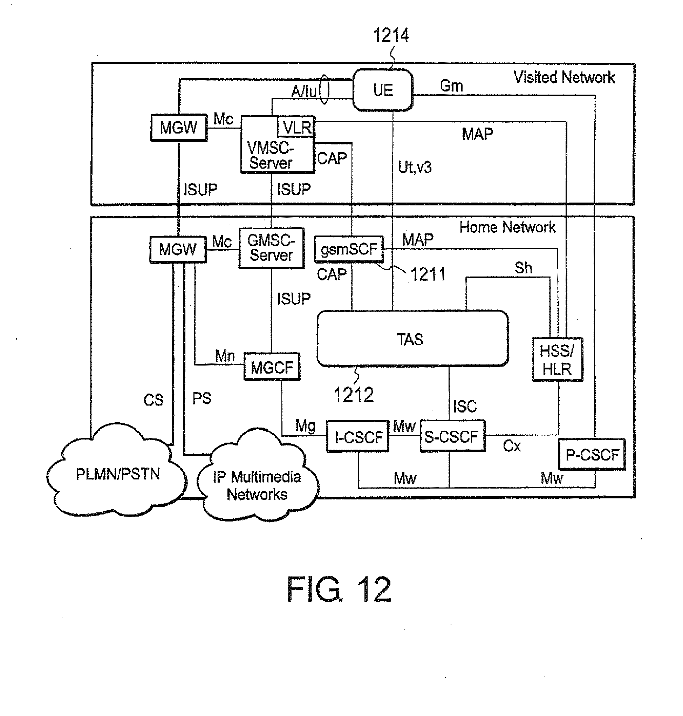

The current Release 7 VCC (Voice Call Continuity) uses a concept in which a VMSC (Visited Mobile Switch Center) transmits a call signal to a VCC AS (Application Service) by bypassing with using a CAMEL (Customized Application for Mobile network Enhanced Logic) process as a trigger. A similar concept is used for a supplementary service to aggregate processes into the IMS (see FIG. 12). The CAMEL of the VMSC is used for both of an MO (Mobile Origination) call signal and an MT (Mobile Termination) call signal. A gsmSCF (GSM Service Control Function) 1211 requests an IMRN (IP Multimedia Routing Number) from a TAS 1212 in a home network, and the VMSC transmits a call signal to the TAS 1212 according to the IMRN. In subsequent supplementary services, calling is controlled on the basis of the TAS 1212.

A request from a UE 1214 for a supplementary service is transmitted directly to the TAS 1212 via an interface such as Ut or v3. The above solution is advantageous in exerting no influence on the central control network. However, that solution does exert influence on terminals. Thus, an existing terminal cannot receive any service.

Another solution to provide a supplementary service for an aggregation process in the IMS is to extend an MSC-Server with a MGCF function for interconnection of ISUP/SIP (Session Initiation Protocol), which is referred to as an eMSC-Server, and control all call signals in the IMS. The eMSC-Server is involved in outgoing/incoming signals in the corresponding CS access network. The CS call signal of the terminal is translated into a VolP calling by the eMSC-Server. The supplementary service control signal is processed in the IMS. To transmit an incoming call signal to the CS access network, the incoming call signal is led to the MGW/eMSC-Server. In this case, the incoming signal is controlled by the IMS system. The eMSC-Server is not involved when the mobile terminal is only within a PS (Packet Switch) area.

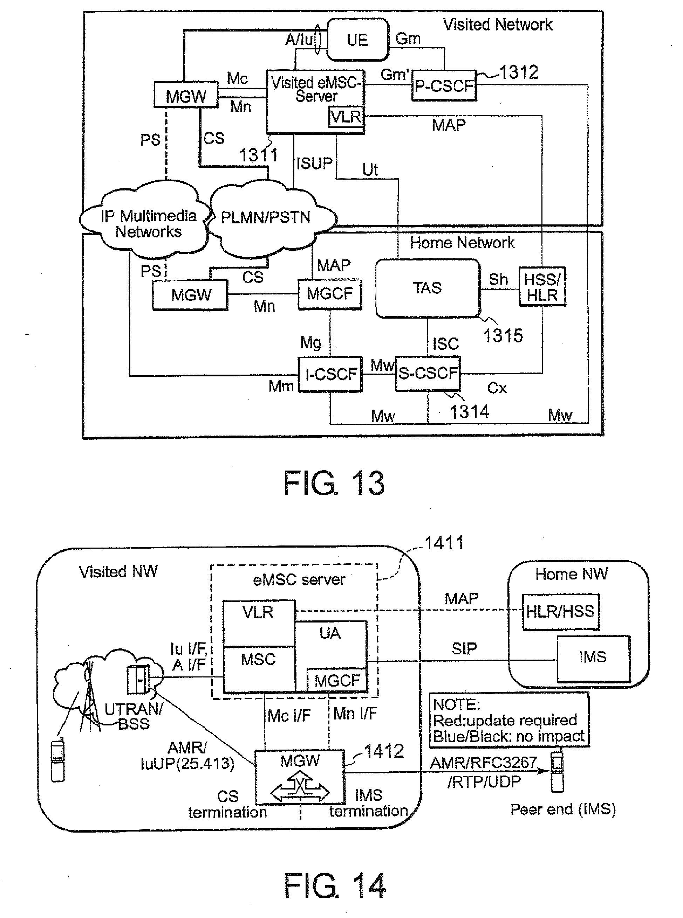

FIG. 13 shows an example of roaming. When a terminal sends a call signal, the CS signal from the terminal is converted into an SIP signal by a VeMSC-Server (Visited eMSC-Server) 1311 and transmitted to a P-CSCF (Proxy CSCF) 1312 in a visited network. (The P-CSCF 1312 may be included in the VeMSC 1311 to operate.) The SIP signal is transmitted to a TAS 1315 according to the settings of iFCs (inter Filter Criteria) in an S-CSCF 1314. The call signal is controlled on the basis of the TAS 1315. Then the TAS 1315 takes a supplementary service control. In the known method, the terminal transmits a supplementary service request via A/lu interface to the MSC. The VeMSC-Server 1311 incorporates or translates the supplementary service request into the SIP signal and transmits it to the TAS 1315. The TAS 1315 receives the supplementary service request and operates according to the request. This solution has advantages over other solutions, such as VCC, in that existing terminals can be supported and CAMEL is not required. Therefore, this solution has only slight influence on the MSC-Server and no influence on existing terminals in the transition to the all-IP system.

Additionally, the location of the user in the IP network is defined by the MGW in the visited network. Therefore, audio communication with a person is directly transmitted in any IMS system without crossing the home network. If call control methods in the IMS are more widely used, this network configuration will have more advantages in that both of administrators of home networks and administrators of visited networks can benefit from terminals in view of reduction of network resources. In contrast, the solution with VCC always requires communication paths in both of a visited network and a home network for any audio communication.

FIG. 14 shows an example of detailed architecture of the eMSC-Server. The eMSC-Server 1411 has an MGCF function involving a general MSC-Server, a VLR, and a user agent (hereinafter referred to as UA). The VLR and the HLR are under such minimum influence that indexes should be added in the MAP protocol. The HLR should indicate that terminals are handled by a centralized control process of the IMS in the home network. The VLR should analyze a flag indicating such fact. The MGW 1412 is required to accept an incoming CS connection as well as an incoming in the IMS. Mc and Mn interfaces may be incorporated into a new single interface.

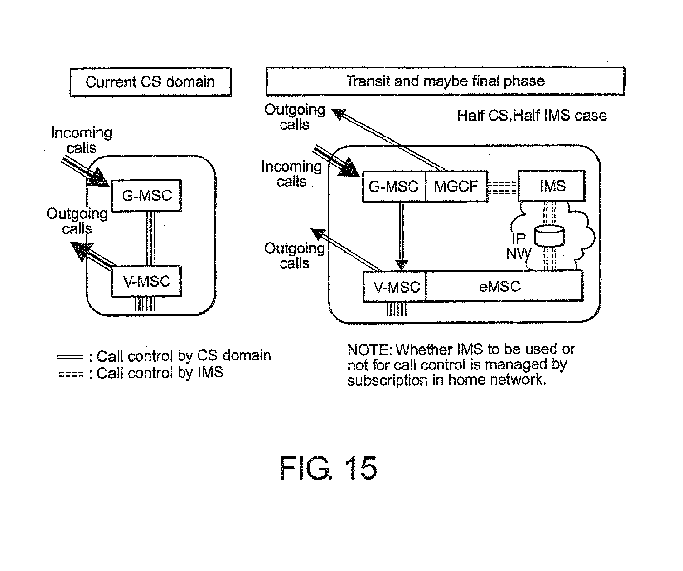

FIG. 15 shows an example of a transition from an existing CS network to an AIPN (All IP Network), which supports an eMSC-Server. An administrator can adjust customers' profiles which allow a centralized process in the IMS depending upon the capacity of the IMS system, thereby implementing a smooth transition from the CS network to the IMS (IP network).

The present application is based upon and claims the benefit of priority from Japanese patent application No. 2006-346031, filed on December 22, 2006, the disclosure of which is incorporated herein in its entirety by reference.

## Claims

1. A circuit switching user agent system including a service processing device arranged in a home network of an IMS (IP Multimedia Sudsystem)IMMD (Multi-Media Domain), **characterized in that** the circuit switching user agent system further includes:
a communication device arranged in a visited network where a mobile terminal has visited, the communication device being configured to have a function of interconversion between a UNI (User-Network Interface) signal in a circuit switching network to which the mobile terminal is connected and a signal used in the IMS/MMD.

2. The circuit switching user agent system as recited in claim 1, wherein the communication device includes a registration part operable to perform a registration to the IMS/MMD with use of location registration information/status of the mobile terminal in the circuit switching network and a transfer part operable to incorporate the UNI (User-Network Interface) signal from the mobile terminal into the signal used in the IMS/MMD and transfer it to the service processing device.

3. The circuit switching user agent system as recited in claim 1 or 2, wherein the communication device is operable to incorporate a portion of a circuit switching signal in a cellular phone system into a call control signal in the JMS/MMD.

4. The circuit switching user agent system as recited in claim 3, wherein an alternative part is located in the visited network where the mobile terminal has visited or in the communication device, the alternative part being operable to perform a registration process to the IMS/MMD depending upon the location registration of the mobile terminal in the circuit switching of the cellular phone system so as to implement a function required for the mobile terminal to have for the IMS/MMD on behalf of the mobile terminal.

5. The circuit switching user agent system as recited in claim 3 or 4, wherein the service processing device is operable to process a signal used in the IMS/MMD in which the circuit switching signal in the cellular phone system has been incorporated.

6. The circuit switching user agent system as recited in any one of claims 1 to 5, wherein further includes a conversion part operable to convert user media data in the circuit switching network to media data used in the IMS/MMD,

7. A communication device arranged in a visited network where a mobile terminal has visited in a circuit switching user agent system including a service processing device arranged in a home network of an IMS (IP Multimedia Subsystem)/MMD (Multi-Media Domain), **characterized in that** the communication device is configured to have a function of interconversion between a UNI (User-Network Interface) signal in a circuit switching network to which the mobile terminal is connected and a signal used in the IMS/MMD.

8. The communication device as recited in claim 7, wherein the communication device includes a registration part operable to perform a registration to the IMS/MMD with use of location registration information/status of the mobile terminal in the circuit switching network and a transfer part operable to incorporate the UNI (User-Network interface) signal from the mobile terminal into the signal used in the IMS/MMD and transfer it to the service processing device.

9. The communication device as recited in claim 8, wherein the communication device incorporates a portion of a circuit switching signal in a cellular phone system into a call control signal in the IMS/MMD.

10. The communication device as recited in any one of claims 7 to 9, wherein the communication device further includes an alternative part operable to perform a registration process to the IMS/MMD depending upon the location registration of the mobile terminal in the circuit switching in the cellular phone system so as to implement a function required for the mobile terminal to have for the IMS/MMD on behalf of the mobile terminal.

11. The communication device as recited in any one of claims 7 to 9, wherein the circuit switching user agent system further includes a conversion part operable to convert user media data in the circuit switching network to media data used in the IMS/MMD.

12. A service processing device arranged in a home network of an IMS (IP Multimedia Subsystem)/MMD (Multi-Media Domain), **characterized in that** the service processing device comprises:
a processing part operable to process a signal used in the IMS/MMD in which a circuit switching signal in a cellular phone system has been incorporated.

13. The service processing device as recited in claim 12, wherein the processing part is operable to derive a UNI (User-Network interface) signal of a mobile terminal connected to a circuit switching network from the signal used in the IMS/MMD and to incorporate the UNI signal into a signal used in the IMS/MMD to be transmitted to the mobile terminal.

14. The service processing device as recited in claim 12 or 13, wherein the service processing device is an application server operable to provide a supplementary service in the IMS/MMD.

15. A service providing method used in a circuit switching user agent system including a service processing device arranged in a home network of an IMS (IP Multimedia Subsystem)/MMD (Multi-Media Domain), **characterized in that** a communication device arranged in a visited network where a mobile terminal has visited performs:
a process of registration to the IMS/MMD with use of location registration information/status of the mobile terminal in a circuit switching network to which the mobile terminal has been connected; and
a process of incorporating a UNI (User-Network Interface) signal from the mobile terminal into a signal used in the IMS/MMD and transferring it to the service processing device.

16. The service providing method as recited in claims 15, wherein the communication device incorporates a portion of a circuit switching signal in a cellular phone system into a call control signal in the IMS/MMD.

17. The service providing method as recited in claim 15 or 16, wherein the communication device performs a registration process to the IMS/MMD depending upon the location registration of the mobile terminal in the circuit switching of the cellular phone system so as to implements a function required for the mobile terminal to have for in the IMS/MMD on behalf of the mobile terminal.

18. The service providing method as recited in claim 16 or 17, wherein the service processing device processes a signal used in the IMS/MMD in which the circuit switching signal in the cellular phone system has been incorporated.

19. The service providing method as recited in any one of claims 15 to 18, wherein the circuit switching user agent system further includes a conversion part operable to convert user media data in the circuit switching network to media data used in the IMS/MMD.
